# DEMANDE DE BREVET EUROPEEN

(11) **EP 3 210 859 A1**
(43) Date de publication de la demande: **30.08.2017**
(21) Numéro de dépôt: 17155134.4
(22) Date de dépôt: 08.02.2017
(51) Int. Cl.: B62D 25/10, B62D 25/12, B60R 21/34, E05B 77/08

(54) **STRUCTURE AVANT D'UN VEHICULE AUTOMOBILE COMPORTANT UNE GACHE QUI COMPORTE UNE PARTIE SUPERIEURE ET UNE PARTIE INFERIEURE DEFORMABLE, GACHE CORRESPONDANTE ET PROCEDE DE FABRICATION D'UNE TELLE GACHE**

(30) Priorité: 24.02.2016 FR 1651510
(71) Demandeur: PSA Automobiles SA, 78300 Poissy (FR)
(72) Inventeur: REMY, Stéphane, 70400 BELVERNE (FR)

(57) **Abrégé**

La présente invention concerne une structure avant d'un véhicule automobile comportant un capot (1), une serrure de capot (2) et une gâche (3), la gâche (3) comportant une base (31) adaptée pour former une platine de fixation de la gâche (3) sur une doublure (11) du capot (1), une partie supérieure (32) qui se prolonge de la base (31) en direction de la peau (12) du capot (1) et une partie inférieure (33) qui se prolonge de la base (31) en direction de la serrure (2), caractérisée en ce que la base (31), la partie supérieure (32) et la partie inférieure (33) de la gâche (3) sont adaptées pour être conformées à partie d'une seule plaque de tôle, par un procédé d'emboutissage du type à simple effet.

## Description

La présente invention concerne une structure avant d'un véhicule automobile comportant un capot, une serrure de capot et une gâche. Elle concerne aussi une gâche destinée à former une partie d'une telle structure avant et un procédé de fabrication d'une telle gâche.

L'invention concerne principalement une gâche qui comporte une base adaptée pour former une platine de fixation de la gâche sur une doublure du capot, une partie supérieure qui se prolonge de la base en direction de la peau du capot et une partie inférieure qui se prolonge de la base en direction de la serrure.

Une telle structure avant est par exemple divulguée dans le document EP2163460 où une partie supérieure relie la base de la gâche à la peau de capot et une partie inférieure relie la base de la gâche à la serrure du capot. La partie supérieure, de grande dimension, permet en se déformant de manière amortie, d'absorber l'énergie d'un choc qui serait dû au contact, à basse vitesse du véhicule, d'un piéton sur le capot. L'enfoncement amorti du capot permis par la partie supérieure de la gâche, protège la tête du piéton contre les risques de blessures graves. La partie inférieure de la gâche, qui est formée par un fil de gâche en forme de U, est très rigide faisant que seule la partie supérieure de la gâche peut se déformer en cas de choc. La partie supérieure de la gâche doit donc présenter une grande dimension et une forme complexe pour s'écraser suivant une cinématique précise, pour permettre de conserver une bonne résistance à l'écrasement pour amortir le choc. Chaque partie est emboutie séparément pour après être assemblées pour former la gâche. Un tel assemblage augmente le coût de production de la gâche et augmente les jeux fonctionnels inhérents à la complexité de réalisation de chaque pièce.

Le but de la présente invention est de proposer une solution permettant d'obtenir un bon écrasement amorti de la gâche en cas de choc à cet emplacement du capot. Une telle gâche doit présenter un faible coût de production et limiter les jeux fonctionnels pour améliorer la qualité perçue de la partie avant du véhicule.

Ce but est atteint, selon l'invention, au moyen d'une structure avant d'un véhicule automobile comportant un capot, une serrure de capot et une gâche, la gâche comportant une base adaptée pour former une platine de fixation de la gâche sur une doublure du capot, une partie supérieure qui se prolonge de la base en direction de la peau du capot et une partie inférieure qui se prolonge de la base en direction de la serrure, telle que la base, la partie supérieure et la partie inférieure de la gâche sont adaptés pour être conformés à partie d'une seule plaque de tôle, par un procédé d'emboutissage du type à simple effet.

Selon une première caractéristique de l'invention, la base de la gâche comporte deux parties adaptées pour être solidarisées entre elles pour former une platine plane mono-pièce. La partie supérieure de la gâche comporte une bande qui vient de matière avec la base. La bande se prolonge en une seule partie de la première partie de la base vers la seconde partie de la base, en direction de la doublure de capot. La bande de la partie supérieure de la gâche forme une boucle trapézoïdale d'écartement maximum à la jonction avec ladite base. Une telle forme permet un bon écrasement en cas de choc et évite le flambage de la bande lors du choc.

Selon une deuxième caractéristique de l'invention, la partie inférieure forme un support pour un fil de gâche de forme essentiellement linéaire. Un tel fil de gâche est destiné à collaborer avec la serrure de capot pour verrouiller le capot. La partie inférieure comportant deux pattes de fixation, chaque patte de fixation venant de matière avec la base et forme un support pour l'extrémité correspondante du fil de gâche. La première patte de fixation se prolonge de la première partie de la base, la seconde patte de fixation se prolongeant de la seconde partie de la base. Les pattes de fixation et le fil de gâche forment une boucle trapézoïdale d'écartement maximum à la jonction avec la base. Comme précédemment, une telle forme permet un bon écrasement en cas de choc et évite le flambage de la partie inférieure lors du choc. Le fil de gâche linéaire simplifie son procédé de fabrication et limite l'impact de sa grande rigidité lors du choc.

La présente invention concerne aussi une gâche de capot constituant une partie d'une structure d'un véhicule automobile telle que décrite précédemment, qui comporte une base adaptée pour former une platine de fixation de la gâche sur une doublure du capot, une partie supérieure qui se prolonge de la base dans une première direction et une partie inférieure qui se prolonge de la base dans une seconde direction opposée à la première direction, telle que la base, la partie supérieure et la partie inférieure sont adaptées pour être conformées à partie d'une seule plaque de tôle, par un procédé d'emboutissage du type à simple effet.

La présente invention concerne enfin un procédé de réalisation d'une gâche telle que décrite précédemment, qui comporte :
- Une première étape de découpage d'un flan de tôle ;
- Une deuxième étape de formage par un dispositif d'emboutissage à simple effet ; et
- une troisième étape d'assemblage d'une première partie de la base avec une seconde partie de la base pour former une platine plane mono-pièce de fixation de la gâche sur une doublure du capot.

Selon un autre aspect, l'invention concerne également un véhicule automobile équipé d'une structure avant selon l'invention telle que défini précédemment.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
- la figure 1 représente une vue latérale partielle schématique d'une partie d'une structure avant d'un véhicule automobile qui comporte un capot, une serrure de capot et une gâche selon l'invention ;
- la figure 2 représente une vue en perspective de la base, de la partie supérieure et la partie inférieure de la gâche, lors d'une étape intermédiaire d'un procédé de réalisation de la gâche ; et
- la figure 3 représente une vue en perspective de la gâche selon l'invention.

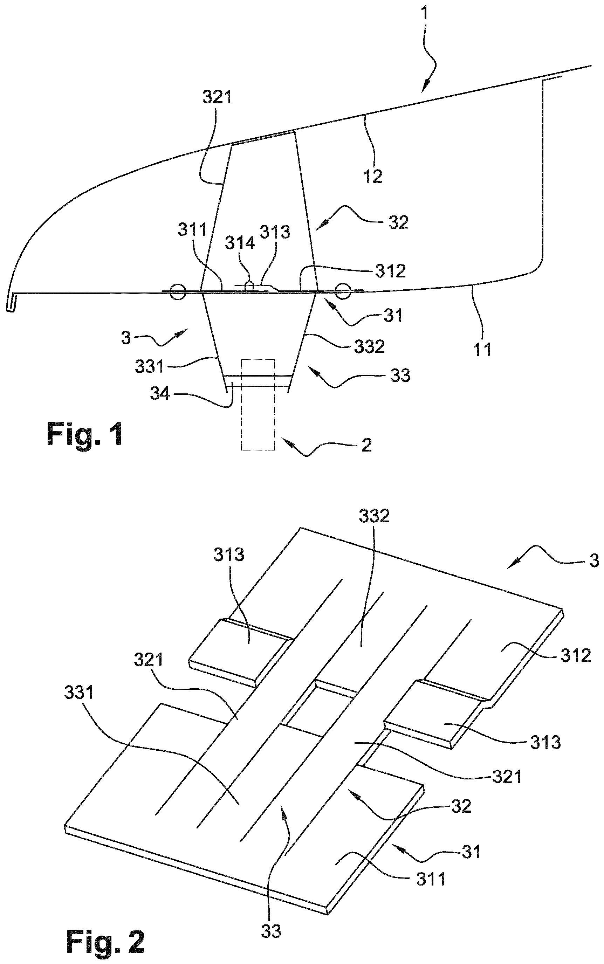

La figure 1 représente une vue latérale partielle schématique d'une partie d'une structure avant d'un véhicule automobile qui comporte un capot 1, une serrure de capot 2 et une gâche 3. La gâche 3 comporte une base 31 adaptée pour former une platine de fixation de la gâche 3 sur une doublure 11 du capot 1. La base 31 de la gâche 3 comporte une première partie 311 et une seconde partie 312 qui sont adaptées pour être solidarisés entre elles pour former la platine qui se présente comme une partie plane mono-pièce de la gâche 3. La première partie 311 est reliée à la seconde partie 312 de la base 31 de la gâche 3 par un chevauchement 313 de ces extrémités libres. Des points de soudures 314 solidarisent la première partie 311 à la seconde partie 312 de la base 31 de la gâche 3. D'autres moyens de fixation tels que le sertissage, des vis ou des rivés peuvent être utilisés, que ce soit avec la création d'une zone de chevauchement ou par un contact bord à bord des extrémités libres de la première partie 311 et de la seconde partie 312 de la base 31 de la gâche 3. La gâche 3 comporte une partie supérieure 32 qui se prolonge de la base 31 en direction de la peau 12 du capot 1. La gâche 3 comporte une partie inférieure 33 qui se prolonge de la base 31 en direction de la serrure 2. La partie supérieure 32 de la gâche 3 comporte deux bandes parallèles 321 qui viennent de matière avec la base 31. Les deux bandes 321 de la partie supérieure 32 se prolongent de la première partie 311 vers la seconde partie 312 de la base 31 de la gâche 3. Les deux bandes 321 de la partie supérieure 31 de la gâche 3 forment deux boucles trapézoïdales, d'écartement maximum à la jonction avec la base 31 de la gâche 3. Une telle forme trapézoïdale permet un bon écrasement des deux bandes 321 en cas de choc sur le capot 1 à l'emplacement de la gâche 3, permettant un enfoncement amortie du capot 1 à cet emplacement. La partie inférieure 33 de la gâche 3 forme un support pour un fil de gâche 34. Le fil de gâche 34 présente une forme essentiellement linéaire. Le fil de gâche 34 est destiné à collaborer avec la serrure de capot 2 pour verrouiller le capot 1. La partie inférieure 33 de la gâche 3 comporte une première patte de fixation 331 et une seconde patte de fixation 332. La première patte de fixation 331 vient de matière avec la première partie 311 de la base 31 de la gâche 3. La seconde patte de fixation 332 vient de matière avec la seconde partie 312 de la base 31 de la gâche 3. La première patte de fixation 331, La seconde patte de fixation 332 et le fil de gâche 34 forment une boucle trapézoïdale d'écartement maximum à la jonction avec la base 31 de la gâche 3. Comme pour la partie supérieure 32 de la gâche 3, une telle forme trapézoïdale permet un bon écrasement de la première patte de fixation 331 et de la seconde patte de fixation 332 en cas de choc sur le capot 1 à l'emplacement de la gâche 3, permettant un enfoncement amortie du capot 1 à cet emplacement qui se cumule avec l'enfoncement amortie du capot 1 créé par la partie supérieure 33 de la gâche 3.

La figure 2 représente une vue en perspective de la base 31, de la partie supérieure 32 et la partie inférieure 31 de la gâche 3, lors d'une étape d'un procédé de réalisation de la gâche 3. Durant cette étape, les découpages nécessaires dans le flan de tôle ont déjà été réalisés de même que le formage des extrémités libres de la seconde partie 312 de la base 31 de la gâche 3, pour former les chevauchements 313. L'étape suivante consiste, par un même outil d'emboutissage du type à simple effet, de former simultanément :
- les deux bandes 321 de la partie supérieure 32 de la gâche 3 ;
- la première patte de fixation 331 et la seconde patte de fixation 332 de la partie inférieure 33 de la gâche ; et
- de faire chevaucher les extrémités libres de la première partie 311 et de la seconde partie 312 de la base 31 de la gâche 3.

Une troisième étape, non représentée, consiste à souder ensemble la première partie 311 et la seconde partie 312 de la base 31 pour former une platine de fixation mono-pièce et de souder le fil de gâche aux extrémités libre de la première patte 331 et de la seconde patte 332 de la partie inférieure 33 de la gâche 3.

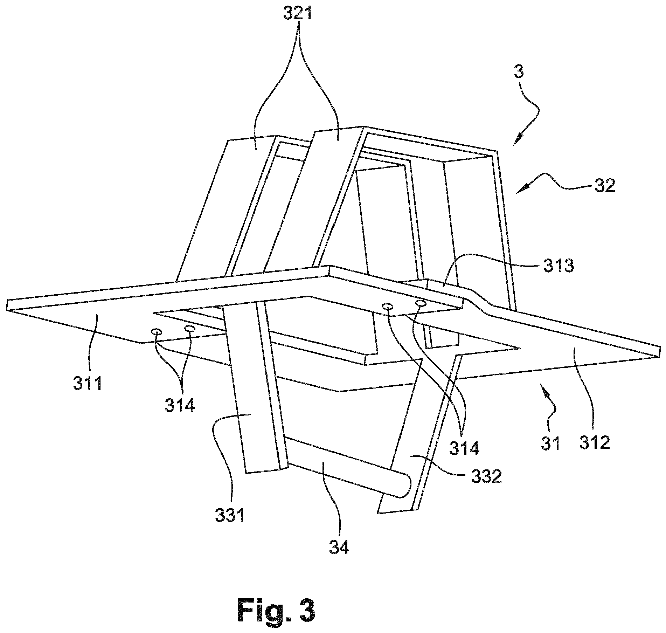

La figure 3 représente une vue en perspective de la gâche 3 selon l'invention. Dans cette vue est plus particulièrement visible la forme de la base 31 avec les deux chevauchements 313 des extrémités libres de la première partie 311 et de la seconde partie 312 de la base 31. Des points de soudure 314 permettent de fixer l'ensemble pour former une platine mono-pièce plane. Est plus particulièrement visible aussi, la forme des deux bandes 321 de la partie supérieure 32 de la gâche 3 et la forme de la première patte de fixation 331 et de la seconde patte de fixation 332 aux extrémités libres desquels sont fixés le fil de gâche 34.

## Revendications

1. Structure avant d'un véhicule automobile comportant un capot (1), une serrure de capot (2) et une gâche (3), la gâche (3) comportant une base (31) adaptée pour former une platine de fixation de la gâche (3) sur une doublure (11) du capot (1), une partie supérieure (32) qui se prolonge de la base (31) en direction de la peau (12) du capot (1) et une partie inférieure (33) qui se prolonge de la base (31) en direction de la serrure (2), **caractérisée en ce que** la base (31), la partie supérieure (32) et la partie inférieure (33) de la gâche (3) sont adaptées pour être conformées à partie d'une seule plaque de tôle, par un procédé d'emboutissage du type à simple effet.

2. Structure avant selon la revendication 1, **caractérisée en ce que** la base (31) de la gâche (3) comporte deux parties (311, 312) adaptées pour être solidarisées entre elles pour former une platine plane mono-pièce .

3. Structure avant selon la revendication 2, **caractérisée en ce que** la partie supérieure (32) de la gâche (3) comporte une bande (321) qui vient de matière avec la base (31), ladite bande (321) se prolongeant en une seule partie de la première partie (311) de la base (3) vers la seconde partie (312) de la base (31), en direction de la peau (12) de capot (1).

4. Structure avant selon la revendication 3, **caractérisée en ce que** la bande (321) de la partie supérieure (32) de la gâche (3) forme une boucle trapézoïdale d'écartement maximum à la jonction avec ladite base (31).

5. Structure avant selon l'une quelconque des revendications 1 à 4, **caractérisée en ce que** la partie inférieure (33) forme un support pour un fil de gâche (34) de forme essentiellement linéaire, ledit fil de gâche (34) étant destiné à collaborer avec la serrure de capot (2) pour verrouiller le capot (1), ladite partie inférieure (31) comportant deux pattes de fixation (311, 312), chaque patte de fixation (311, 312) venant de matière avec la base (32) et formant un support pour l'extrémité correspondante du fil de gâche (34).

6. Structure avant selon la revendication 2 et 5, **caractérisée en ce que** la première patte de fixation (331) se prolonge de la première partie de la base (311), la seconde patte de fixation (332) se prolongeant de la seconde partie de la base (312).

7. Structure avant selon la revendication 6, **caractérisée en ce que** les pattes de fixation (331, 332) et le fil de gâche (34) forment une boucle trapézoïdale d'écartement maximum à la jonction avec la base (31).

8. Gâche de capot (3) constituant une partie d'une structure d'un véhicule automobile selon l'une quelconque des revendications précédentes, comportant une base (31) adaptée pour former une platine de fixation de la gâche (3) sur une doublure (11) du capot (1), une partie supérieure (32) qui se prolonge de la base (31) dans une première direction et une partie inférieure (33) qui se prolonge de la base (31) dans une seconde direction opposée à la première direction, **caractérisée en ce que** la base (31), la partie supérieure (32) et la partie inférieure (33) sont adaptées pour être conformées à partie d'une seule plaque de tôle, par un procédé d'emboutissage du type à simple effet.

9. Procédé de fabrication d'une gâche (3) selon la revendication 8, **caractérisé en ce qu'**il comporte :
• Une première étape de découpage d'un flan de tôle ; et
• Une deuxième étape de formage par un dispositif d'emboutissage du type à simple effet.

10. Procédé selon la revendication 9, **caractérisé en ce qu'**il comporte une troisième étape d'assemblage d'une première partie de la base (311) avec une seconde partie de la base (312) pour former une platine plane mono-pièce de fixation de la gâche (3) sur une doublure (11) du capot(1).
